# EUROPEAN PATENT APPLICATION

(11) **EP 4 848 734 A1**
(43) Date of publication of application: **02.12.2026**
(21) Application number: 25747841.2
(22) Date of filing: 24.01.2025
(51) Int. Cl.: H04N 21/234

(54) **VIDEO PROCESSING METHOD BASED ON CLOUD MANAGEMENT PLATFORM, AND CLOUD MANAGEMENT PLATFORM**

(30) Priority: 30.01.2024 CN 202410129027; 28.02.2024 CN 202410223753
(71) Applicant: Huawei Cloud Computing Technologies Co., Ltd., Gui'an New District, Guizhou 550025 (CN)
(72) Inventor: LIAO, Yingqiang, Guiyang, Guizhou 550025 (CN); LONG, Changchun, Guiyang, Guizhou 550025 (CN); MA, Guoquan, Guiyang, Guizhou 550025 (CN)
(74) Representative: Huawei European IPR
(86) International application number: PCT/CN2025/074746
(87) International publication number: WO 2025/162273

(57) **Abstract**

This application discloses a video processing method based on a cloud management platform and a cloud management platform, to improve utilization of a codec resource, thereby avoiding resource waste. The method in this application includes: A first tenant may send a dedicated resource creation request for a first service instance to a creation interface provided by the cloud management platform. Therefore, the cloud management platform may create, for the first service instance based on the request, a plurality of first codec instances dedicated to the first service instance, where each first codec instance supports at least one encoding/decoding flavor. When the first service instance has an encoding/decoding requirement, the first service instance may send a first encoding/decoding request to the cloud management platform, where the first encoding/decoding request indicates to obtain a second video of a first encoding/decoding flavor based on a first video. Then, the cloud management platform may select, based on the request, a second codec instance supporting the first encoding/decoding flavor from the plurality of first codec instances, and indicate the second codec instance to encode/decode the first video, to obtain the second video.

## Description

This application claims priorities to Chinese Patent Application No. 202410129027.4, filed with the China National Intellectual Property Administration on January 30, 2024 and entitled "ENCODING/DECODING METHOD BASED ON CLOUD MANAGEMENT PLATFORM AND CLOUD MANAGEMENT PLATFORM", and to Chinese Patent Application No. 202410223753.2, filed with the China National Intellectual Property Administration on February 28, 2024 and entitled "VIDEO PROCESSING METHOD BASED ON CLOUD MANAGEMENT PLATFORM AND CLOUD MANAGEMENT PLATFORM", both of which are incorporated herein by reference in their entireties.

### TECHNICAL FIELD

Embodiments of this application relate to the field of cloud technologies, and in particular, to a video processing method based on a cloud management platform and a cloud management platform.

### BACKGROUND

With the rapid development of cloud technologies, more and more tenants choose to deploy their applications on the cloud. Because some applications involve video encoding/decoding, cloud vendors need to deploy codec resources for the applications, so that the applications can invoke the resources to complete video encoding/decoding.

Cloud service systems provided in related technologies may include applications of tenants and underlying resource pools. When the application of the tenant has an encoding/decoding requirement for a video, the application may send an encoding/decoding request for the video to an underlying resource pool that is deployed by a cloud vendor for the application in advance, to invoke some resources in the underlying resource pool to encode/decode the video based on the encoding/decoding request, so as to obtain a processed video, and return the processed video to the application.

In the foregoing process, because the underlying resource pool is deployed by a cloud management platform in advance for use by the application of the tenant, and a video encoding/decoding requirement of the application in service often exhibits time-dependent characteristics, the cloud vendor usually deploys sufficient underlying resources in the underlying resource pool to ensure performance of the application in a service peak period. Consequently, when the application is in a service off-peak period, most of the resources in the underlying resource pool remain idle, resulting in severe resource waste.

### SUMMARY

Embodiments of this application provide a video processing method based on a cloud management platform and a cloud management platform, to improve utilization of a codec resource by a service instance of a tenant to some extent, thereby avoiding resource waste.

A first aspect of embodiments of this application provides a video processing method based on a cloud management platform, where the cloud management platform is configured to manage infrastructures that provide cloud services, the infrastructures include a first service instance created by the cloud management platform for a first tenant, and an application of the first tenant runs in the first service instance; and the method includes:

When the first tenant needs to create, for the first service instance, a first codec resource pool dedicated to the first service instance, the cloud management platform may provide a creation interface for the first tenant. Therefore, the first tenant inputs a dedicated resource creation request for the first service instance to the creation interface, where the dedicated resource creation request is used to request to create the first codec resource pool dedicated to the first service instance.

After obtaining the dedicated resource creation request, the cloud management platform may create, based on the dedicated resource creation request, the first codec resource pool dedicated to the first service instance. The first codec resource pool includes a plurality of first codec instances, and each first codec instance may support at least one encoding/decoding flavor.

After the first codec resource pool dedicated to the first service instance is created, when the first service instance has a processing requirement for a first video, the first service instance may send a first encoding/decoding request to the cloud management platform, where the first encoding/decoding request indicates that the first service instance needs to process the first video into a second video of a first encoding/decoding flavor.

After obtaining the first encoding/decoding request, the cloud management platform may select, based on the first encoding/decoding request, a second codec instance supporting the first encoding/decoding flavor from the plurality of first codec instances included in the first codec resource pool, and indicate the second codec instance to encode/decode the first video, to obtain the second video of the first encoding/decoding flavor, and return the second video to the first service instance for use, thereby meeting the video processing requirement of the first service instance.

It can be learned from the foregoing method that because both a quantity of first codec instances in the first codec resource pool and the encoding/decoding flavor supported by the first codec instance may be customized by the first tenant, the cloud management platform deploys a codec resource in the first codec resource pool based on considerations of the dedicated first tenant. Because the first tenant comprehensively considers usage of the codec resource in the first codec resource pool by the first service instance in each time period, and factors considered are comprehensive, the utilization of the codec resource by the first service instance of the first tenant can be improved to some extent, thereby avoiding resource waste.

In a possible implementation, the encoding/decoding flavor includes at least one of the following: video resolution, video coding standard, and video image quality. In the foregoing implementation, for any first codec in any codec instance in the first codec resource pool, an encoding/decoding flavor supported by the first codec may include resolution of a video that can be obtained by the first codec through encoding/decoding, a coding standard that is complied with by the video that can be obtained by the first codec through encoding/decoding, image quality of the video that can be obtained by the first codec through encoding/decoding, and the like.

In a possible implementation, the infrastructure further includes a plurality of third codec instances shared by service instances of a plurality of tenants; and that the cloud management platform creates, based on the dedicated resource creation request, the plurality of first codec instances dedicated to the first service instance includes: The cloud management platform selects, from the plurality of third codec instances based on the dedicated resource creation request, several available third codec instances as the plurality of first codec instances dedicated to the first service instance. In the foregoing implementation, the infrastructure managed by the cloud management platform further includes a second codec resource pool that is created by the cloud management platform in advance and that can be shared by service instances of a plurality of tenants. The second codec resource pool includes a plurality of third codec instances, and each third codec instance may support at least one encoding/decoding flavor. Based on this, after receiving the dedicated resource creation request sent by the first tenant, the cloud management platform may select, from the plurality of third codec instances included in the second codec resource pool based on an instruction of the dedicated resource creation request, several available third codec instances as the plurality of first codec instances. The plurality of first codec instances form the first codec resource pool. It can be learned that, when the cloud management platform determines that the first codec resource pool dedicated to the first service instance of the first tenant needs to be created for the first service instance of the first tenant, the cloud management platform may select, from the second codec resource pool, some codec resources (namely, the foregoing several third codec instances) that can be shared by the service instances of a plurality of tenants, as codec resources (namely, the foregoing plurality of first codec instances) dedicated to the first service instance of the first tenant, to form the first codec resource pool, thereby meeting a customization requirement of the first tenant for a dedicated codec resource for the first service instance of the first tenant is met.

In a possible implementation, each first codec instance includes a plurality of first codecs, and each first codec supports one encoding/decoding flavor; that the cloud management platform selects, based on the first encoding/decoding request, the second codec instance supporting the first encoding/decoding flavor from the plurality of first codec instances, and indicates the second codec instance to encode/decode the first video, to obtain the second video includes: The cloud management platform selects, based on the first encoding/decoding request, an available second codec instance from the plurality of first codec instances, selects a second codec supporting the first encoding/decoding flavor from a plurality of first codecs included in the second codec instance, and indicates the second codec to encode/decode the first video, to obtain the second video. In the foregoing implementation, in the first codec resource pool, each first codec instance includes a plurality of first codecs, and each first codec supports one encoding/decoding flavor. After receiving the first encoding/decoding request, the cloud management platform may determine that the first service instance needs to process the first video into the second video of the first encoding/decoding flavor. Therefore, the cloud management platform may select the second codec instance from the plurality of first codec instances, and use a first coder supporting the first coding flavor as the second codec in the plurality of first codecs included in the second codec instance. In this case, the cloud management platform may indicate the second codec to encode/decode the first video, to obtain the second video of the first encoding/decoding flavor, and return the second video to the first service instance for use. It can be learned that, when determining that the first service instance of the first tenant has an encoding/decoding requirement, the cloud management platform may invoke a codec resource in the first codec resource pool dedicated to the first service instance to serve the first service instance, so that the first tenant can dedicatedly use the resource, and effective resource utilization is implemented.

In a possible implementation, that the cloud management platform indicates the second codec to encode/decode the first video to obtain the second video includes: The cloud management platform sends first information of the second codec to the first service instance, where the first information is used by the first service instance to send the first encoding/decoding request to the second codec, for the second codec to encode/decode the first video based on the first encoding/decoding request, to obtain the second video, and the first information includes at least one of the following: a network address of the second codec, an access port of the second codec, an identity credential of the second codec, and an encoding/decoding flavor supported by the second codec. In the foregoing implementation, after determining the second codec, the cloud management platform sends the first information of the second codec to the first service instance. In this case, the first service instance may access the second codec based on the first information, to send the first encoding/decoding request to the second codec. Because the first encoding/decoding request indicates to process the first video into the second video of the first encoding/decoding flavor, the second codec may encode/decode the first video based on the first encoding/decoding request, to obtain the second video of the first encoding/decoding flavor, and return the second video to the first service instance. It can be learned that the first information may include related information of the second codec, for example, the network address of the second codec, the access port of the second codec, the identity credential of the second codec, and the encoding/decoding flavor supported by the second codec. Therefore, the first service instance can accurately access the second codec based on the related information of the second codec, so that the second codec meets the encoding/decoding requirement of the first service instance.

In a possible implementation, the method further includes: The cloud management platform obtains, based on the dedicated resource creation request, utilization of resources occupied by the plurality of first codec instances; and if the utilization is greater than or equal to a utilization threshold indicated by the dedicated resource creation request, the cloud management platform selects at least one third codec instance from remaining third codec instances as a new first codec instance, and adds the new first codec instance to the plurality of first codec instances. In the foregoing implementation, the dedicated resource creation request further includes an elastic scaling strategy set by the first tenant for the first codec resource pool dedicated to the first service instance. Therefore, the cloud management platform may collect, in real time according to the elastic scaling strategy, utilization of all resources occupied by the plurality of first codec instances in the first codec resource pool. If the utilization is greater than or equal to the utilization threshold included in the elastic scaling strategy, the cloud management platform selects, from the remaining third codec instances included in the second codec resource pool, at least one third codec instance as a new first codec instance, and migrates the new first codec instance to the first codec resource pool, to scale up the first codec resource pool. It can be learned that the cloud management platform may manage a capacity of the first codec resource pool according to the elastic scaling strategy set by the first tenant for the first codec resource pool, to meet a management requirement of the first tenant for the first codec resource pool dedicated to the first tenant.

In a possible implementation, the infrastructure further includes a second service instance of a second tenant, the plurality of tenants include the second tenant, each third codec instance includes a plurality of third codecs, and each third codec supports one encoding/decoding flavor. The method further includes: The cloud management platform receives a second encoding/decoding request sent by the second service instance, where the second encoding/decoding request indicates to obtain a fourth video of a second encoding/decoding flavor based on a third video; and the cloud management platform selects, based on the second encoding/decoding request, an available fourth codec instance from the remaining third codec instances, selects a fourth codec supporting the second encoding/decoding flavor from a plurality of third codecs included in the fourth codec instance, and indicates the fourth codec to encode/decode the third video, to obtain the fourth video. In the foregoing implementation, in the second codec resource pool, each third codec instance includes a plurality of third codecs, and each third codec supports one encoding/decoding flavor. When the second service instance of the second tenant in the plurality of tenants that share the second codec resource pool has a video processing requirement, after the second service instance may send the second encoding/decoding request to the cloud management platform, the cloud management platform may determine that the second service instance needs to process the third video into the fourth video of the second encoding/decoding flavor. Therefore, the cloud management platform may select the fourth codec instance from the plurality of third codec instances, and use a third coder supporting the second coding flavor as the fourth codec in the plurality of third codecs included in the fourth codec instance. In this case, the cloud management platform may indicate the fourth codec to encode/decode the third video, to obtain the fourth video of the second encoding/decoding flavor, and return the fourth video to the second service instance for use. It can be learned that, when determining that the second service instance of the second tenant has an encoding/decoding requirement, the cloud management platform may invoke a codec resource in the second codec resource pool shared by the service instances of the plurality of tenants to serve the second service instance, so that the second tenant can share the resource, and maximum resource sharing is implemented.

In a possible implementation, that the cloud management platform indicates the fourth codec to encode/decode the third video to obtain the fourth video includes: The cloud management platform sends second information of the fourth codec to the second service instance, where the second information is used by the second service instance to send the second encoding/decoding request to the fourth codec, for the fourth codec to encode/decode the third video based on the second encoding/decoding request, to obtain the fourth video, and the second information includes at least one of the following: a network address of the fourth codec, an access port of the fourth codec, an identity credential of the fourth codec, and an encoding/decoding flavor supported by the fourth codec. In the foregoing implementation, after determining the fourth codec, the cloud management platform sends the second information of the fourth codec to the second service instance. In this case, the second service instance may access the fourth codec based on the second information, to send the second encoding/decoding request to the fourth codec. Because the second encoding/decoding request indicates to process the third video into the fourth video of the second encoding/decoding flavor, the fourth codec may encode/decode the third video based on the second encoding/decoding request, to obtain the fourth video of the second encoding/decoding flavor, and return the fourth video to the second service instance. It can be learned that the second information may include related information of the fourth codec, for example, the network address of the fourth codec, the access port of the fourth codec, the identity credential of the fourth codec, and the encoding/decoding flavor supported by the fourth codec. Therefore, the second service instance can accurately access the fourth codec based on the related information of the fourth codec, so that the fourth codec meets the encoding/decoding requirement of the second service instance.

In a possible implementation, any one of the first service instance, the second service instance, the first codec instance, and the third codec instance may include any one of the following: a physical server, a virtual machine, a container, a micro virtual machine, and a bare metal server.

A second aspect of embodiments of this application provides a cloud management platform, where the cloud management platform is configured to manage an infrastructure that provides a cloud service, and the infrastructure includes a first service instance of a first tenant; and the cloud management platform includes: a first receiving module, configured to receive, through a creation interface, a dedicated resource creation request sent by the first tenant for the first service instance; a creation module, configured to create, based on the dedicated resource creation request, a plurality of first codec instances dedicated to the first service instance, where each first codec instance supports at least one encoding/decoding flavor; a second receiving module, configured to receive a first encoding/decoding request sent by the first service instance, where the first encoding/decoding request indicates to obtain a second video of a first encoding/decoding flavor based on a first video; and a processing module, configured to: select, based on the first encoding/decoding request, a second codec instance supporting the first encoding/decoding flavor from the plurality of first codec instances, and indicate the second codec instance to encode/decode the first video, to obtain the second video.

In a possible implementation, the encoding/decoding flavor includes at least one of the following: video resolution, video coding standard, and video image quality.

In a possible implementation, the infrastructure further includes a plurality of third codec instances shared by service instances of a plurality of tenants; and the creation module is configured to select, from the plurality of third codec instances based on the dedicated resource creation request, several available third codec instances as the plurality of first codec instances dedicated to the first service instance.

In a possible implementation, each first codec instance includes a plurality of first codecs, and each first codec supports one encoding/decoding flavor; and the processing module is configured to: select, based on the first encoding/decoding request, an available second codec instance from the plurality of first codec instances, select a second codec supporting the first encoding/decoding flavor from a plurality of first codecs included in the second codec instance, and indicate the second codec to encode/decode the first video, to obtain the second video.

In a possible implementation, the processing module is configured to send first information of the second codec to the first service instance, where the first information is used by the first service instance to send the first encoding/decoding request to the second codec, for the second codec to encode/decode the first video based on the first encoding/decoding request, to obtain the second video, and the first information includes at least one of the following: a network address of the second codec, an access port of the second codec, an identity credential of the second codec, and an encoding/decoding flavor supported by the second codec.

In a possible implementation, the cloud management platform further includes: an obtaining module, configured to obtain, based on the dedicated resource creation request, utilization of resources occupied by the plurality of first codec instances; and an elastic scaling module, configured to: if the utilization is greater than or equal to a utilization threshold indicated by the dedicated resource creation request, select at least one third codec instance from remaining third codec instances as a new first codec instance, and add the new first codec instance to the plurality of first codec instances.

In a possible implementation, the infrastructure further includes a second service instance of a second tenant, the plurality of tenants include the second tenant, each third codec instance includes a plurality of third codecs, and each third codec supports one encoding/decoding flavor; the second receiving module is further configured to receive a second encoding/decoding request sent by the second service instance, where the second encoding/decoding request indicates to obtain a fourth video of a second encoding/decoding flavor based on a third video; and the processing module is further configured to: select, based on the second encoding/decoding request, an available fourth codec instance from the remaining third codec instances, select a fourth codec supporting the second encoding/decoding flavor from a plurality of third codecs included in the fourth codec instance, and indicate the fourth codec to encode/decode the third video, to obtain the fourth video.

In a possible implementation, the processing module is configured to send second information of the fourth codec to the second service instance, where the second information is used by the second service instance to send the second encoding/decoding request to the fourth codec, for the fourth codec to encode/decode the third video based on the second encoding/decoding request, to obtain the fourth video, and the second information includes at least one of the following: a network address of the fourth codec, an access port of the fourth codec, an identity credential of the fourth codec, and an encoding/decoding flavor supported by the fourth codec.

In a possible implementation, the first service instance or the first codec instance includes any one of the following: a physical server, a virtual machine, a container, a micro virtual machine, and a bare metal server.

A third aspect of embodiments of this application provides a compute device cluster. The compute device cluster includes at least one compute device, and each compute device includes a processor and a memory. The memory is configured to store instructions. The processor is configured to cause, according to the instructions, the compute device cluster to perform the method according to any one of the first aspect or the possible implementations of the first aspect.

A fourth aspect of embodiments of this application provides a computer storage medium. The computer storage medium stores one or more instructions. When the instructions are executed by one or more computers, the one or more computers are caused to perform the method according to any one of the first aspect or the possible implementations of the first aspect.

A fifth aspect of embodiments of this application provides a computer program product. The computer program product stores instructions. When the instructions are executed by a computer, the computer is caused to perform the method according to any one of the first aspect or the possible implementations of the first aspect.

In embodiments of this application, when a first tenant needs to create, for a first service instance of the first tenant, a first codec resource pool dedicated to the first service instance of the first tenant, the first tenant may send a dedicated resource creation request for the first service instance to a creation interface provided by a cloud management platform. Then, the cloud management platform may create, for the first service instance based on the dedicated resource creation request, the first codec resource pool dedicated to the first service instance. The first codec resource pool includes a plurality of first codec instances, and each first codec instance supports at least one encoding/decoding flavor. When the first service instance needs to process a first video into a second video of a first encoding/decoding flavor, the first service instance may send a first encoding/decoding request to the cloud management platform, where the first encoding/decoding request indicates to obtain the second video of the first encoding/decoding flavor based on the first video. Then, the cloud management platform may select, based on the first encoding/decoding request, a second codec instance supporting the first encoding/decoding flavor from the plurality of first codec instances in the first codec resource pool, and indicate the second codec instance to encode/decode the first video, to obtain the second video of the first encoding/decoding flavor, and return the second video to the first service instance for use. In the foregoing process, because both a quantity of first codec instances in the first codec resource pool and the encoding/decoding flavor supported by the first codec instance may be customized by the first tenant, the cloud management platform deploys a codec resource in the first codec resource pool based on considerations of the dedicated first tenant. Because the first tenant comprehensively considers usage of the codec resource in the first codec resource pool by the first service instance in each time period, and factors considered are comprehensive, the utilization of the codec resource by the first service instance of the first tenant can be improved to some extent, thereby avoiding resource waste.

### BRIEF DESCRIPTION OF DRAWINGS

FIG. 1 is a diagram of a structure of a cloud service system according to an embodiment of this application;
FIG. 2 is a diagram of another structure of a cloud service system according to an embodiment of this application;
FIG. 3 is a schematic flowchart of a video processing method based on a cloud management platform according to an embodiment of this application;
FIG. 4 is a diagram of another structure of a cloud service system according to an embodiment of this application;
FIG. 5A and FIG. 5B are a diagram of another structure of a cloud service system according to an embodiment of this application;
FIG. 6 is a diagram of a structure of a cloud management platform according to an embodiment of this application;
FIG. 7 is a diagram of a structure of a compute device according to an embodiment of this application;
FIG. 8 is a diagram of a structure of a compute device cluster according to an embodiment of this application; and
FIG. 9 is a diagram in which computer devices in a computer cluster are connected to each other over a network according to an embodiment of this application.

### DESCRIPTION OF EMBODIMENTS

Embodiments of this application provide a video processing method based on a cloud management platform and a cloud management platform, to improve utilization of a codec resource by a service instance of a tenant to some extent, thereby avoiding resource waste.

In the specification, claims, and accompanying drawings of this application, terms such as "first" and "second" are intended to distinguish between similar objects but do not necessarily describe a specific order or sequence. It should be understood that the terms used in such a way are interchangeable in proper circumstances, which is merely a discrimination manner that is used when objects having a same attribute are described in embodiments of this application. In addition, terms "include", "have", and any other variants thereof are intended to cover non-dedicated inclusion, so that a process, method, system, product, or device that includes a series of units is not necessarily limited to those units, but may include other units not expressly listed or inherent to such a process, method, product, or device.

With the rapid development of cloud technologies, more and more tenants choose to deploy their applications on the cloud. Because some applications (for example, a video livestreaming application, a game application, and a video play application) involve video encoding/decoding, cloud vendors need to deploy codec resources for the applications, so that the applications can invoke the resources to complete video encoding/decoding.

Cloud service systems provided in related technologies may include applications of tenants and underlying resource pools. When the application of the tenant has an encoding/decoding requirement for a video, the application may send an encoding/decoding request for the video to an underlying resource pool that is deployed by a cloud vendor for the application in advance, to invoke some codec resources in the underlying resource pool to encode/decode (for example, encode or decode the video) the video based on the encoding/decoding request, so as to obtain a processed video (for example, an encoded video or a decoded video), and return the processed video to the application, for use by the application.

In the foregoing process, because the underlying resource pool is deployed by a cloud management platform in advance for use by the application of the tenant, and a video encoding/decoding requirement of the application in service often exhibits time-dependent characteristics,, the cloud vendor usually deploys sufficient codec resources in the underlying resource pool to ensure performance of the application in a service peak period. Consequently, when the application is in a service off-peak period, the application uses only a small part of codec resources in the underlying resource pool. Consequently, most of the codec resources in the underlying resource pool remain idle, resulting in severe resource waste and extremely low resource utilization.

Further, in the foregoing process, for the underlying resource pool set by the cloud vendor for the application of the tenant, the cloud vendor performs charging based on a quantity of resources allocated to the application. Because the application has low utilization of the codec resources in the underlying resource pool, encoding/decoding costs of the tenant are excessively high.

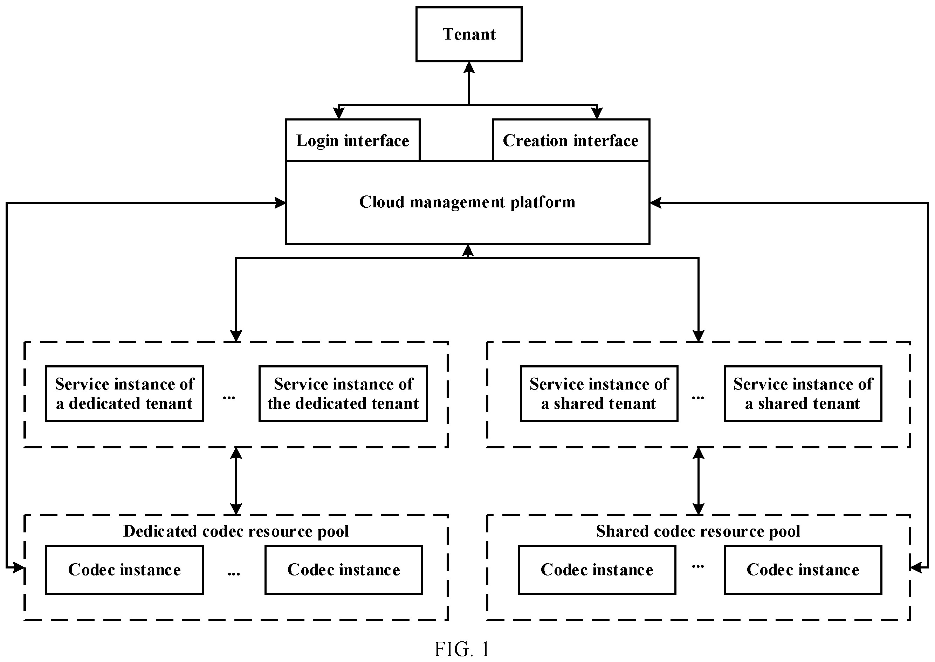

To resolve the foregoing problem, an embodiment of this application provides a video processing method based on a cloud management platform. The method may be implemented by using a cloud service system. FIG. 1 is a diagram of a structure of a cloud service system according to an embodiment of this application. As shown in FIG. 1, the cloud service system includes infrastructures that can provide cloud services and a cloud management platform that manages the infrastructures. The following separately describes the cloud management platform and the infrastructure.

The cloud management platform can centrally manage the infrastructures in the entire cloud service system (for example, select a service instance dedicated to a tenant from a plurality of service instances included in the infrastructures based on a requirement of the tenant to run an application of the tenant and provide remote services for the tenant), and can also be opened to tenants outside the cloud service system and respond to their requests. For example, the cloud management platform may provide various interfaces such as a login interface and a creation interface, for access by a client of a tenant (for example, a terminal device used by the tenant or a browser on the terminal device). The cloud management platform may perform identity authentication on a client of a dedicated tenant or a shared tenant through the login interface. After the identity authentication succeeds, the client of the dedicated tenant or the shared tenant may be allowed to log in to the cloud management platform. For another example, the cloud management platform may further allow, through a creation interface, a client of a dedicated tenant to send, to the cloud management platform, a dedicated resource creation request of the dedicated tenant for a service instance of the dedicated tenant. Then, the cloud management platform may determine, based on the dedicated resource creation request, various parameters of a dedicated codec resource pool that needs to be created by the dedicated tenant for the service instance of the dedicated tenant, an elastic scaling strategy for the dedicated codec resource pool, and the like. These parameters may include a quantity of a plurality of codec instances included in the dedicated codec resource pool, a quantity of a plurality of codecs (encoding and decoding devices) included in each codec instance, a type of an encoding/decoding flavor (encoding-decoding flavor) supported by each codec, and the like. In this case, the cloud management platform may create, based on these parameters, the dedicated codec resource pool for the service instance of the dedicated tenant, so that the service instance of the dedicated tenant can invoke the dedicated codec resource pool, thereby implementing video encoding/decoding. In addition, the cloud management platform may further subsequently manage codec resources (namely, the codec instances in the resource pool) in the dedicated codec resource pool according to the elastic scaling strategy, to ensure utilization and availability of the resources in the dedicated codec resource pool.

The infrastructure includes a service instance of a dedicated tenant (running an application of a dedicated tenant), a service instance of a shared tenant (running an application of a shared tenant), and a shared codec resource pool deployed in advance. The shared codec resource pool includes a plurality of codec instances, and each codec instance includes a plurality of codecs. In addition, after receiving a request of the dedicated tenant, the cloud management platform may further create a dedicated codec resource pool that can be dedicated to the service instance of the dedicated tenant. Generally, a codec instance in the dedicated codec resource pool is from the shared codec resource pool, that is, the codec instance in the dedicated codec resource pool is migrated from a codec instance in the shared codec resource.

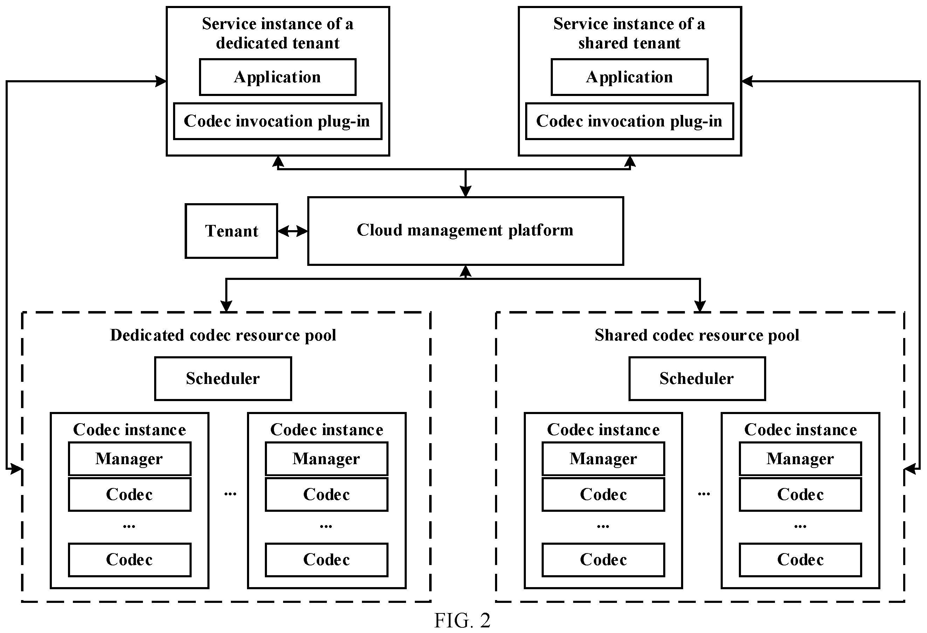

To further understand components in the infrastructure, the following separately describes these components with reference to FIG. 2. FIG. 2 is a diagram of another structure of a cloud service system according to an embodiment of this application. As shown in FIG. 2, a cloud management platform may manage a service instance of a dedicated tenant, service instances of a plurality of shared tenants, a dedicated codec resource pool dedicated to the service instance of the dedicated tenant, and a shared codec resource pool shared by the service instances of the plurality of shared tenants. The service instance of the dedicated tenant may include an application of the dedicated tenant and a codec invocation plug-in (for example, an FFmpeg plug-in, a GStreamer plug-in, or an application programming interface (application programming interface, API) plug-in). Similarly, a service instance of any shared tenant may include an application of the shared tenant and a codec invocation plug-in. For the dedicated codec resource pool dedicated to the service instance of the dedicated tenant, the dedicated codec resource pool may include a scheduler and a plurality of codec instances, and each codec instance includes a manager and a plurality of codecs. Similarly, for the shared codec resource pool shared by the service instances of the plurality of shared tenants, the shared codec resource pool may also include a scheduler and a plurality of codec instances, and each codec instance includes a manager and a plurality of codecs.

Based on this, when the service instance of the dedicated tenant has a video encoding/decoding requirement, the service instance of the dedicated tenant may send an encoding/decoding request for a video to the scheduler of the dedicated codec resource pool dedicated to the service instance of the dedicated tenant. Because the encoding/decoding request indicates to convert the video into a new video of an encoding/decoding flavor, the scheduler selects an available codec instance from the plurality of codec instances in the dedicated codec resource pool, and indicates a manager of the codec instance to select, from a plurality of codecs of the codec instance, a codec that supports the encoding/decoding flavor indicated by the encoding/decoding request, so that the codec encodes/decodes the video based on the encoding/decoding flavor, to obtain the new video, and return the new video to the service instance of the dedicated tenant. Similarly, when a service instance of a shared tenant has a video encoding/decoding requirement, the service instance of the shared tenant may send an encoding/decoding request for a video to the scheduler of the shared codec resource pool. Because the encoding/decoding request indicates to convert the video into a new video of an encoding/decoding flavor, the scheduler selects an available codec instance from the plurality of codec instances in the shared codec resource pool, and indicates a manager of the codec instance to select, from a plurality of codecs of the codec instance, a codec that supports the encoding/decoding flavor indicated by the encoding/decoding request, so that the codec encodes/decodes the video based on the encoding/decoding flavor, to obtain the new video, and return the new video to the service instance of the shared tenant.

It should be noted that the cloud management platform may be components deployed in a distributed manner, that is, the scheduler and managers of the dedicated codec resource pool, and the scheduler and managers of the shared codec resource pool all may be considered as a part of the cloud management platform, and are remotely deployed in the resource pools and the codec instances. Therefore, operations performed by the scheduler and the manager may be considered as operations performed by the cloud management platform. Details are not described subsequently.

Further, the service instances and the codec instances in the infrastructure are essentially cloud instances in the infrastructure. The cloud instance may be presented in a plurality of manners. For example, the cloud instance may be a physical server selected by the cloud management platform. For another example, the cloud instance may be a bare metal server selected by the cloud management platform. For another example, the cloud instance may be a virtual machine (virtual machine, VM) created by the cloud management platform on a physical server by using a virtualization technology. For another example, alternatively, the cloud instance may be a container (docker) created by the cloud management platform on a physical server by using a virtualization technology. For another example, the cloud instance may be a micro virtual machine (microVM) created by the cloud management platform on a physical server by using a virtualization technology.

Further, for the dedicated codec resource pool and the shared codec resource pool, these resource pools may be deployed at a same site or different sites. The site may be presented in a plurality of forms. For example, the site may be a region (region) in the infrastructure. For another example, the site may be an availability zone (availability zone) in the infrastructure. For another example, the site may be a data center (data center, DC) in the infrastructure. For another example, the site may be a room (room) in the infrastructure.

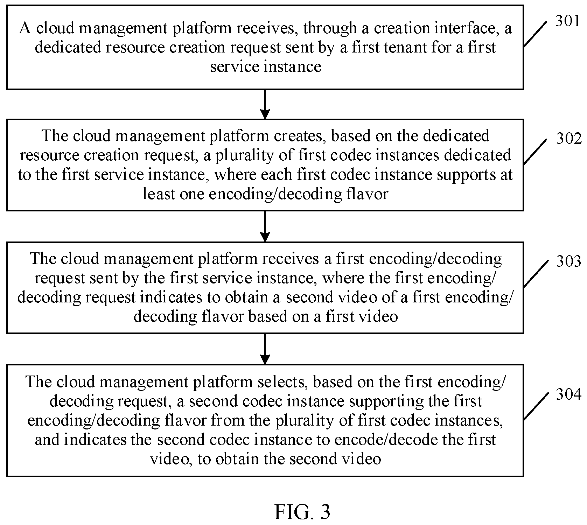

It can be learned from the foregoing cloud service system that, the cloud management platform may provide a creation interface for a dedicated tenant, so that the dedicated tenant configures a dedicated codec resource pool for a service instance of the dedicated tenant, and the dedicated codec resource pool is dedicated to the service instance of the dedicated tenant. Because both a quantity of codec instances in the dedicated codec resource pool and an encoding/decoding flavor supported by the codec instance may be customized by the dedicated tenant, the cloud management platform deploys a codec resource in the dedicated codec resource pool based on considerations of the dedicated tenant. Because the dedicated tenant comprehensively considers usage of the codec resource in the dedicated codec resource pool by the service instance in each time period, and factors considered are comprehensive, the utilization of the codec resource by the service instance of the dedicated tenant can be improved to some extent, thereby avoiding resource waste. To further understand the process, the following further describes the process with reference to FIG. 3. FIG. 3 is a schematic flowchart of a video processing method based on a cloud management platform according to an embodiment of this application. As shown in FIG. 3, the method may be implemented by using the cloud service system shown in FIG. 1 or FIG. 2. The cloud service system includes infrastructures used to provide cloud services and a cloud management platform managing the infrastructures. The infrastructures include a first service instance of a first tenant (also referred to as a dedicated tenant) (also referred to as a service instance of the dedicated tenant). The method includes:
301: The cloud management platform receives, through a creation interface, a dedicated resource creation request sent by the first tenant for the first service instance.

In this embodiment, when the first tenant needs to create, for the first service instance, a first codec resource pool (also referred to as a dedicated codec resource pool) dedicated to the first service instance, the cloud management platform may provide the creation interface (for example, a dedicated codec resource pool create bar of a tenant interface) for a client of the first tenant. Therefore, the first tenant inputs the dedicated resource creation request for the first service instance to the creation interface via the client of the first tenant. The dedicated resource creation request may include various information such as various parameters of the first codec resource pool, an elastic scaling strategy for the first codec resource pool, and various algorithms for the first codec resource pool. The information is separately described below.
(1) The various parameters of the first codec resource pool may include a quantity of a plurality of first codec instances contained in the first codec resource pool, a quantity of first codecs contained in each first codec instance, a type of an encoding/decoding flavor supported by each first codec, and the like. The encoding/decoding flavor supported by the first codec may include resolution of a video that can be obtained by the first codec through encoding/decoding, a coding standard that is complied with by the video that can be obtained by the first codec through encoding/decoding, and image quality of the video that can be obtained by the first codec through encoding/decoding. For example, an encoding/decoding flavor supported by a first codec is 1080P+H.265+30 FPS, indicating that resolution of a video that can be obtained by the first codec through encoding/decoding is 1080P, a coding standard that is complied with by the video is H.265, and image quality of the video is 30 FPS. For another example, an encoding/decoding flavor supported by another first codec is 720P+H.264+60 FPS, indicating that resolution of a video that can be obtained by the first codec through encoding/decoding is 720P, a coding standard that is complied with by the video is H.264, and image quality of the video is 60 FPS. In addition, the quantity of first codec instances and the quantity of first codecs may be set by the first tenant based on actual requirements. This is not limited herein.
(2) The elastic scaling strategy for the first codec resource pool may include a utilization upper limit (namely, the foregoing utilization threshold), a utilization lower limit, and the like of resources occupied by the plurality of first codec instances. The resources occupied by the plurality of first codec instances may include a central processing unit (central processing unit, CPU), a graphics processing unit (graphics processing unit, GPU), a memory, other codec hardware, and the like. In addition, values of the utilization upper limit and the utilization lower limit may be set by the first tenant based on actual requirements. This is not limited herein.
(3) The various algorithms for the first codec resource pool may include algorithms that may be additionally used by each first codec when the first codec performs an encoding/decoding operation, for example, a self-developed artificial intelligence (artificial intelligence, AI) image quality enhancement algorithm and a self-developed coding algorithm of the first tenant. In this case, after creating the first codec resource pool dedicated to the first service instance, the cloud management platform may deploy these algorithms in each first codec in the first codec resource pool, so that the first codec uses these algorithms to encode/decode a video, to obtain a new video obtained through encoding/decoding, and quality of the new video is higher.

For example, it is assumed that a tenant A is a dedicated tenant, and the tenant A needs to set a dedicated codec resource pool for a service instance (for example, running a livestreaming application developed by the dedicated tenant) of the tenant A. Therefore, the tenant A may log in to the cloud management platform, and the cloud management platform may provide a tenant interface for the tenant A. The tenant interface includes a dedicated codec resource pool create bar. Therefore, the tenant A may input information such as parameters of the dedicated codec resource pool in the dedicated codec resource pool create bar, and an elastic scaling strategy and an algorithm for the dedicated codec resource pool. In this case, the dedicated codec resource pool create bar may send the information, as a dedicated resource creation request sent by the tenant A, to the cloud management platform.

302: The cloud management platform creates, based on the dedicated resource creation request, a plurality of first codec instances dedicated to the first service instance, where each first codec instance supports at least one encoding/decoding flavor.

After obtaining the dedicated resource creation request, the cloud management platform may parse the dedicated resource creation request, to determine that the first codec resource pool dedicated to the first service instance of the first tenant needs to be created. Therefore, the cloud management platform may create the first codec resource pool dedicated to the first service instance. The first codec resource pool includes the plurality of first codec instances, each first codec instance includes a plurality of first codecs, and each first codec may support one encoding/decoding flavor. It should be noted that encoding/decoding flavors supported by any two first codecs may be the same or may be different. This is not limited herein.

Specifically, the cloud management platform may create the first codec resource pool in the following manner.

The infrastructure managed by the cloud management platform further includes a second codec resource pool that has been created by the cloud management platform in advance. The second codec resource pool may be shared by service instances of a plurality of tenants. The second codec resource pool includes a plurality of third codec instances, each third codec instance includes a plurality of third codecs, and each third codec may support one encoding/decoding flavor. It should be noted that encoding/decoding flavors supported by any two third codecs may be the same or may be different. This is not limited herein.

In this case, after receiving the dedicated resource creation request, the cloud management platform may determine, based on the dedicated resource creation request, that the first codec resource pool dedicated to the first service instance of the first tenant needs to be created for the first service instance of the first tenant. Therefore, the cloud management platform may select, based on the parameters of the first codec resource pool included in the dedicated resource creation request, several available third codec instances from the plurality of third codec instances included in the second codec resource pool as the plurality of first codec instances. The plurality of first codec instances form the first codec resource pool.

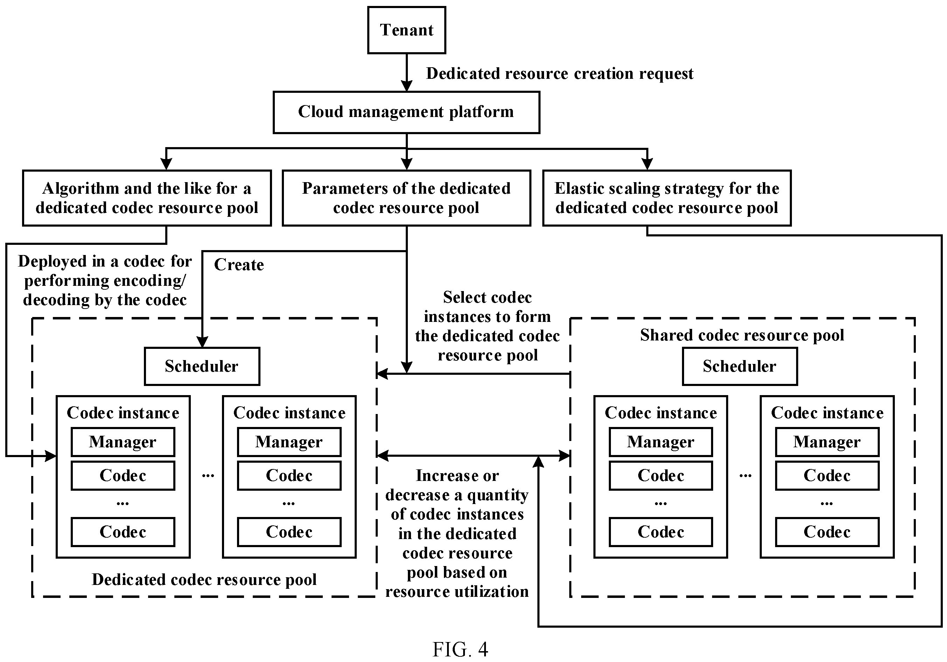

Still as shown in the foregoing example, as shown in FIG. 4 (FIG. 4 is a diagram of another structure of a cloud service system according to an embodiment of this application), a cloud management platform further pre-creates a shared codec resource pool shared by a plurality of tenants. The shared codec resource pool includes a plurality of codec instances, each codec instance includes a plurality of codecs, and each codec supports one encoding/decoding flavor. In this case, after obtaining the dedicated resource creation request sent by the tenant A, the cloud management platform may determine, based on the request, that the dedicated codec resource pool needs to be created for the service instance of the tenant A, and parameters such as a quantity of codec instances in the dedicated codec resource pool, a quantity of codecs included in each codec instance, and an encoding/decoding flavor supported by each codec. Therefore, the cloud management platform may select, from the shared codec resource pool based on indications of these parameters, several codec instances that meet these parameters, and migrate these codec instances to the dedicated codec resource pool of the tenant A, to provide an encoding/decoding service for the service instance of the tenant A.

303: The cloud management platform receives a first encoding/decoding request sent by the first service instance, where the first encoding/decoding request indicates to obtain a second video of a first encoding/decoding flavor based on a first video.

304: The cloud management platform selects, based on the first encoding/decoding request, a second codec instance supporting the first encoding/decoding flavor from the plurality of first codec instances, and indicates the second codec instance to encode/decode the first video, to obtain the second video.

After the first codec resource pool dedicated to the first service instance is created, when the first service instance needs to encode/decode the first video, the first service instance may send the first encoding/decoding request to the cloud management platform, where the first encoding/decoding request indicates that the first service instance needs to process the first video into the second video of the first encoding/decoding flavor. After obtaining the first encoding/decoding request, the cloud management platform may select, based on the first encoding/decoding request, the second codec instance supporting the first encoding/decoding flavor from the plurality of first codec instances included in the first codec resource pool, so that the second codec instance encodes/decodes the first video, to obtain the second video of the first encoding/decoding flavor, and return the second video to the first service instance for use.

Specifically, the cloud management platform may obtain the second video based on the first video in the following manner.

In the first codec resource pool dedicated to the first service instance, each first codec instance may include a plurality of first codecs, and each first codec supports one encoding/decoding flavor. Therefore, after receiving the first encoding/decoding request, the cloud management platform may determine that the first service instance needs to process the first video into the second video of the first encoding/decoding flavor. Therefore, the cloud management platform may select an available first codec instance from the plurality of first codec instances as the second codec instance (for example, if an available quantity of resources occupied by the first codec instance is greater than a preset value, the first codec instance is used as the second codec instance), and use a first coder supporting the first coding flavor as a second codec in a plurality of first codecs included in the second codec instance. In this case, the cloud management platform may indicate the second codec to encode/decode the first video, to obtain the second video of the first encoding/decoding flavor, and return the second video to the first service instance for use.

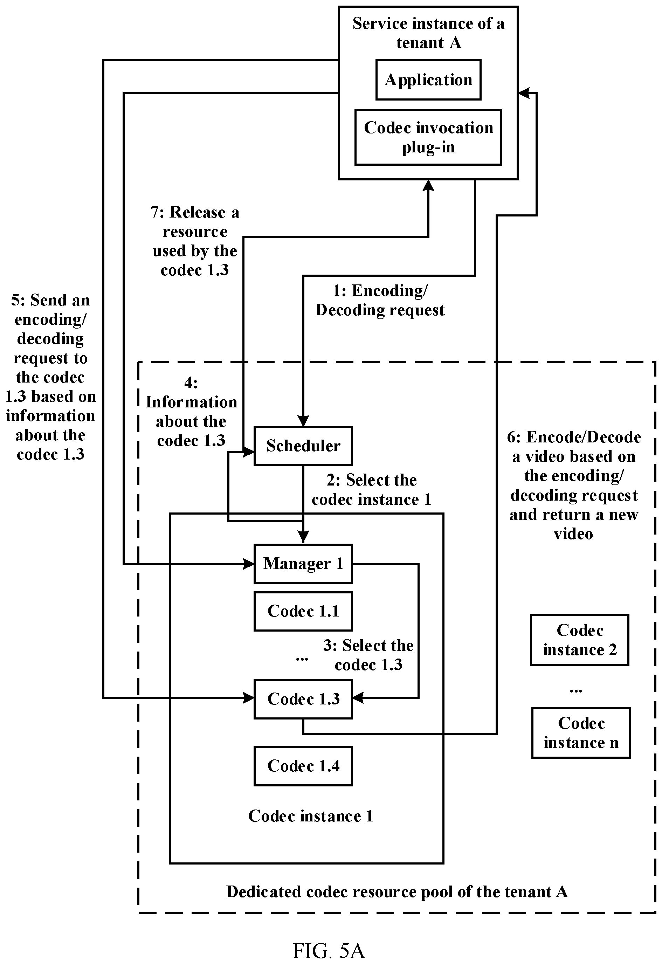

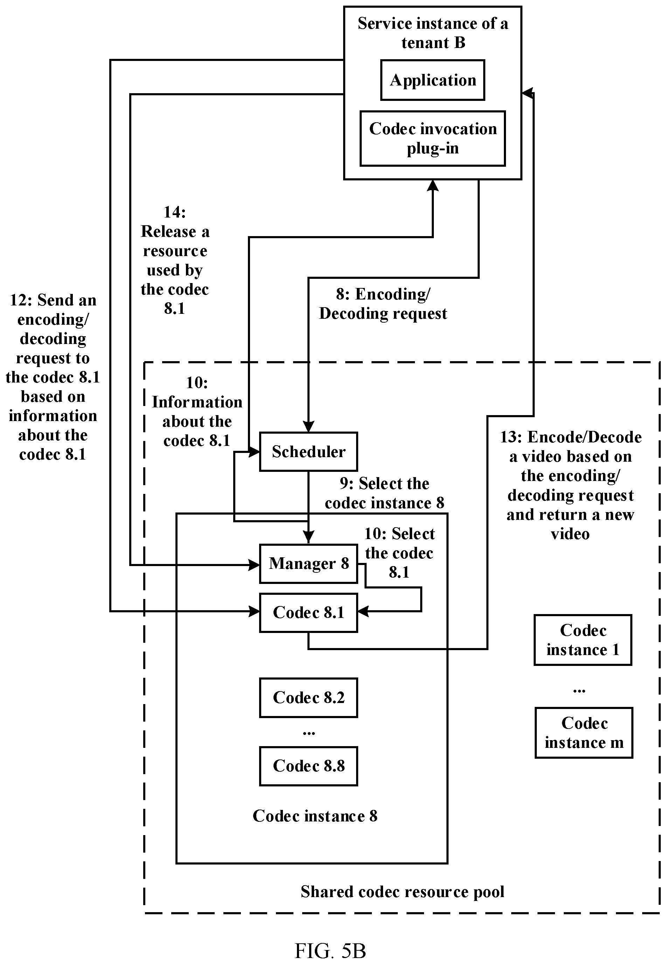

Still as shown in the foregoing example, as shown in FIG. 5A and FIG. 5B (FIG. 5A and FIG. 5B are a diagram of another structure of a cloud service system according to an embodiment of this application, and FIG. 5A and FIG. 5B are drawn based on FIG. 4), it is assumed that an application of the service instance of the tenant A needs to process a video into a new video of 720P+H.264+60 FPS. The application of the service instance of the tenant A may generate an encoding/decoding request, and the encoding/decoding request indicates to process the video into the new video of 720P+H.264+60 FPS. Then, the application may send the encoding/decoding request to a codec invocation plug-in of the service instance of the tenant A. The codec invocation plug-in determines, based on the encoding/decoding request, that the tenant A is a dedicated tenant, and therefore may send the encoding/decoding request to a scheduler in a dedicated codec resource pool of the tenant A. After receiving the encoding/decoding request, the scheduler may select an available codec instance 1 from a plurality of codec instances in the dedicated codec resource pool of the tenant A, and send the encoding/decoding request to a manager 1 in the codec instance 1. The manager 1 may select, from a plurality of codecs of the codec instance 1, a codec 1.3 that supports 720P+H.264+60 FPS, so that the codec 1.3 encodes/decodes the video, to obtain the new video of 720P+H.264+60 FPS, and return the new video to the service instance of the tenant A for use.

More specifically, the cloud management platform may further obtain the second video based on the first video in the following manner.

After determining the second codec, the cloud management platform sends first information of the second codec to the first service instance. In this case, the first service instance may access the second codec based on the first information, to send the first encoding/decoding request to the second codec. Because the first encoding/decoding request indicates to process the first video into the second video of the first encoding/decoding flavor, the second codec may encode/decode the first video based on the first encoding/decoding request, to obtain the second video of the first encoding/decoding flavor.

It should be noted that the first information may include at least one of the following: a network address of the second codec (for example, an internet protocol (internet protocol, IP) address of the second codec), an access port (port) of the second codec, an identity credential of the second codec, and an encoding/decoding flavor supported by the second codec.

Further, for any first codec, when creating the first codec, the cloud management platform allocates a specific quantity of resources to the first codec, that is, resources occupied by the first codec. A quantity of resources occupied by the first codec is associated with an encoding/decoding flavor supported by the first codec. When performing an encoding/decoding operation, the first codec uses a part or all of the resources occupied by the first codec. After completing the encoding/decoding operation, the first codec may release the used part of resources under a notification of the service instance. It can be learned that, after the second codec of the second codec instance completes the encoding/decoding operation on the first video by using a part or all of resources, the obtained second video may be returned to the first service instance of the first tenant, and the first service instance may indicate the second codec instance to release the resources used by the second codec.

Still as shown in the foregoing example, after determining the codec 1.3, the manager 1 may send information about the codec 1.3, such as an IP address, a port, an identity credential, and an encoding/decoding flavor of the codec 1.3, to the service instance of the tenant A (via the scheduler). Therefore, the service instance of the tenant A may access the codec 1.3 based on the information about the codec 1.3, and send the encoding/decoding request to the codec 1.3, so that the codec 1.3 invokes a part of resources occupied by the codec 1.3 to encode/decode the video, to obtain the new video of 720P+H.264+60 FPS, and return the new video to the service instance of the tenant A for use.

Then, the service instance of the tenant A may further indicate the manager 1 to release the resource used by the codec 1.3. Therefore, the manager 1 may indicate the codec 1.3 to release the resource used by the codec 1.3, so that the codec 1.3 is in an idle state, that is, most of the resources occupied by the codec 1.3 are in an available state.

More specifically, because the cloud management platform creates the second codec resource pool shared by the service instances of the plurality of tenants, when a second service instance of a second tenant (also referred to as a shared tenant in the plurality of tenants) (also referred to as a service instance of the shared tenant) of the plurality of tenants needs to process a third video into a fourth video of a second coding flavor, the cloud management platform may obtain the fourth video based on the third video in the following manner.

In the second codec resource pool shared by the service instances of the plurality of tenants, each of remaining third codec instances (a part of third codec instances are migrated to the first codec resource pool) may include a plurality of third codecs, and each third codec supports one encoding/decoding flavor. Therefore, after receiving a second encoding/decoding request sent by the second service instance of the second tenant of the plurality of tenants, the cloud management platform may determine that the second service instance needs to process the third video into the fourth video of the second encoding/decoding flavor. Therefore, the cloud management platform may select an available third codec instance from the remaining third codec instances as a fourth codec instance (for example, if an available quantity of resources occupied by the third codec instance is greater than a preset value, the third codec instance is used as the fourth codec instance), and use a third coder supporting the second coding flavor as a fourth codec in a plurality of third codecs included in the fourth codec instance. In this case, the cloud management platform may indicate the fourth codec to encode/decode the third video, to obtain the fourth video of the second encoding/decoding flavor, and return the fourth video to the second service instance for use.

Still as shown in the foregoing example, it is assumed that an application of a service instance of a tenant B needs to process a video into a new video of 1080P+H.265+30 FPS. The application of the service instance of the tenant B may generate an encoding/decoding request, and the encoding/decoding request indicates to process the video into the new video of 1080P+H.265+30 FPS. Then, the application may send the encoding/decoding request to a codec invocation plug-in of the service instance of the tenant B. The codec invocation plug-in determines, based on the encoding/decoding request, that the tenant B is a shared tenant, and therefore may send the encoding/decoding request to a scheduler in a shared codec resource pool. After receiving the encoding/decoding request, the scheduler may select an available codec instance 8 from a plurality of codec instances in the shared codec resource pool, and send the encoding/decoding request to a manager 8 in the codec instance 8. The manager 8 may select, from a plurality of codecs of the codec instance 8, a codec 8.1 that supports 1080P+H.265+30 FPS, so that the codec 8.1 encodes/decodes the video, to obtain the new video of 1080P+H.265+30 FPS, and return the new video to the service instance of the tenant B for use.

More specifically, the cloud management platform may further obtain the fourth video based on the third video in the following manner.

After determining the fourth codec, the cloud management platform sends second information of the fourth codec to the second service instance. In this case, the second service instance may access the fourth codec based on the second information, to send the second encoding/decoding request to the fourth codec. Because the second encoding/decoding request indicates to process the third video into the fourth video of the second encoding/decoding flavor, the fourth codec may encode/decode the third video based on the second encoding/decoding request, to obtain the fourth video of the second encoding/decoding flavor.

It should be noted that the second information may include at least one of the following: a network address of the fourth codec (for example, an IP address of the fourth codec), an access port of the fourth codec, an identity credential of the fourth codec, and an encoding/decoding flavor supported by the fourth codec.

Further, for any third codec, when creating the third codec, the cloud management platform allocates a specific quantity of resources to the third codec, that is, resources occupied by the third codec. A quantity of resources occupied by the third codec is associated with an encoding/decoding flavor supported by the third codec. When performing an encoding/decoding operation, the third codec uses a part or all of the resources occupied by the third codec. After completing the encoding/decoding operation, the third codec may release the used part of resources under a notification of the service instance. It can be learned that, after the fourth codec of the fourth codec instance completes the encoding/decoding operation on the second video by using a part or all of resources, the obtained fourth video may be returned to the second service instance of the second tenant, and the second service instance may indicate the fourth codec instance to release the resources used by the fourth codec.

Still as shown in the foregoing example, after determining the codec 8.1, the manager 8 may send information about the codec 8.1, such as an IP address, a port, an identity credential, and an encoding/decoding flavor of the codec 8.1, to the service instance of the tenant B. Therefore, the service instance of the tenant B may access the codec 8.1 based on the information about the codec 8.1, and send the encoding/decoding request to the codec 8.1, so that the codec 8.1 invokes a part of resources occupied by the codec 8.1 to encode/decode the video, to obtain the new video of 1080P+H.265+30 FPS, and return the new video to the service instance of tenant B for use.

Then, the service instance of the tenant B may further indicate the manager 8 to release the resource used by the codec 8.1. Therefore, the manager 8 may indicate the codec 8.1 to release the resource used by the codec 8.1, so that the codec 8.1 is in an idle state, that is, most of the resources occupied by the codec 8.1 are in an available state.

More specifically, because the dedicated resource creation request further includes the elastic scaling strategy for the first codec resource pool, the cloud management platform may perform elastic scaling on the first codec resource pool according to the elastic scaling strategy in the following manner.

According to the elastic scaling strategy for the first codec resource pool, the cloud management platform may obtain, in real time or periodically, utilization of total resources occupied by the plurality of first codec instances in the first codec resource pool. If the utilization is greater than or equal to the utilization upper limit indicated by the elastic scaling strategy for the first codec resource pool, the cloud management platform selects at least one third codec instance from remaining third codec instances included in the second codec resource pool as a new first codec instance, and migrates the new first codec instance to the first codec resource pool, to scale up the first codec resource pool. If the utilization is less than the utilization lower limit indicated by the elastic scaling strategy for the first codec resource pool, the cloud management platform selects at least one first codec instance from the plurality of first codec instances included in the first codec resource pool as an original third codec instance, and migrates the original third codec instance back to the second codec resource pool, to scale down the first codec resource pool.

Still as shown in the foregoing example, as shown in FIG. 4, for the dedicated codec resource pool of the tenant A, the tenant A further sets an elastic scaling strategy for the dedicated codec resource pool of the tenant A. Therefore, the cloud management platform may obtain, in real time, utilization of resources occupied by the dedicated codec resource pool of the tenant A. If the utilization is greater than or equal to a utilization upper limit (for example, 90%) indicated by the elastic scaling strategy, the cloud management platform selects a part of codec instances from the shared codec resource pool and migrates them to the dedicated codec resource pool of the tenant A. If the utilization is less than a utilization lower limit (for example, 30%) indicated by the elastic scaling strategy, the cloud management platform selects a part of codec instances from the dedicated codec resource pool and migrates them back to the shared codec resource pool. This implements scaling up/down of the dedicated codec resource pool of the tenant A.

More specifically, the cloud management platform may further charge the first tenant and the second tenant in the following manner.
(1) For any first codec instance in the first codec resource pool, the cloud management platform uses a quantity of resources (specification) occupied by the first codec instance as a charging unit, and multiplies the quantity of resources by duration within which the first codec instance is used, to obtain a fee for using the first codec instance by the first service instance of the first tenant. Because different first codec instances occupy different quantities of resources, correspondingly obtained charging units are also different.
(2) For any third codec in the second codec resource pool, the cloud management platform uses an encoding/decoding flavor supported by the third codec as a charging unit, and multiplies the encoding/decoding flavor by duration within which the third codec is used, to obtain a fee for using the third codec by the second service instance of the second tenant. Because different first codec instances occupy different quantities of resources, correspondingly obtained charging units are also different.

In this embodiment of this application, when the first tenant needs to create, for the first service instance of the first tenant, the first codec resource pool dedicated to the first service instance of the first tenant, the first tenant may send the dedicated resource creation request for the first service instance to the creation interface provided by the cloud management platform. Then, the cloud management platform may create, for the first service instance based on the dedicated resource creation request, the first codec resource pool dedicated to the first service instance. The first codec resource pool includes the plurality of first codec instances, and each first codec instance supports at least one encoding/decoding flavor. When the first service instance needs to process the first video into the second video of the first encoding/decoding flavor, the first service instance may send the first encoding/decoding request to the cloud management platform, where the first encoding/decoding request indicates to obtain the second video of the first encoding/decoding flavor based on the first video. Then, the cloud management platform may select, based on the first encoding/decoding request, the second codec instance supporting the first encoding/decoding flavor from the plurality of first codec instances in the first codec resource pool, and indicate the second codec instance to encode/decode the first video, to obtain the second video of the first encoding/decoding flavor, and return the second video to the first service instance for use. In the foregoing process, because both the quantity of first codec instances in the first codec resource pool and the encoding/decoding flavor supported by the first codec instance may be customized by the first tenant, the cloud management platform deploys the codec resource in the first codec resource pool based on the considerations of the dedicated first tenant. Because the first tenant comprehensively considers the usage of the codec resource in the first codec resource pool by the first service instance in each time period, and the factors considered are comprehensive, the utilization of the codec resource by the first service instance of the first tenant can be improved to some extent, thereby avoiding the resource waste.

Further, in this embodiment of this application, for the second service instance of the second tenant, the second service instance of the second tenant uses the codec resources in the second codec resource pool shared by the service instances of the plurality of tenants. For the second service instance, the cloud management platform performs charging based on an encoding/decoding flavor, as a charging unit, supported by a third codec (for example, the foregoing fourth codec) in a third codec instance (for example, the foregoing fourth codec instance) used by the second service instance in the second codec resource pool. A charging granularity of the cloud management platform is finer and more flexible, and encoding/decoding costs of the second tenant can be reduced to some extent.

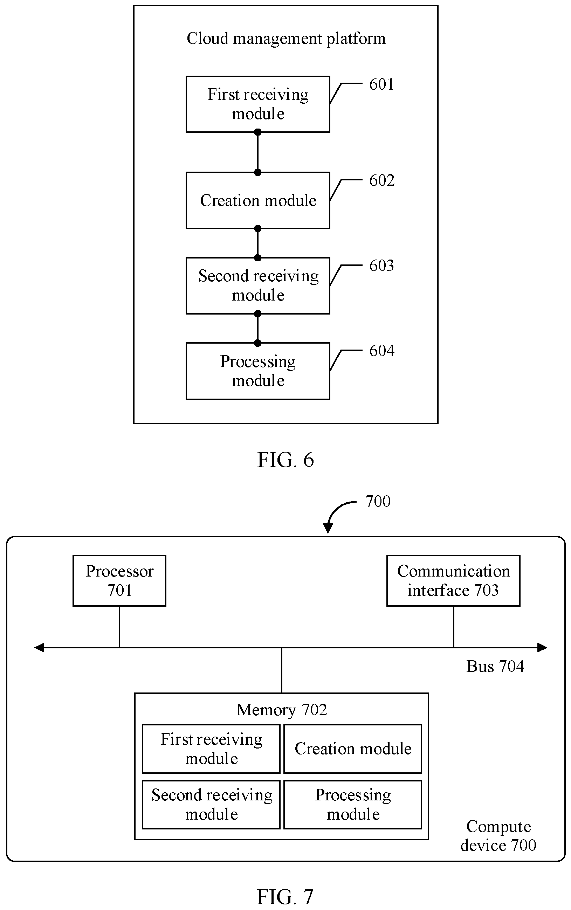

The foregoing is detailed descriptions of the video processing method based on the cloud management platform provided in embodiments of this application. The following describes the cloud management platform provided in embodiments of this application. FIG. 6 is a diagram of a structure of a cloud management platform according to an embodiment of this application. As shown in FIG. 6, the cloud management platform is configured to manage an infrastructure that provides a cloud service. The infrastructure includes a first service instance of a first tenant. The cloud management platform includes:
a first receiving module 601, configured to receive, through a creation interface, a dedicated resource creation request sent by the first tenant for the first service instance, where for example, the first receiving module 601 is configured to implement step 301 in the embodiment shown in FIG. 3;
a creation module 602, configured to create, based on the dedicated resource creation request, a plurality of first codec instances dedicated to the first service instance, where each first codec instance supports at least one encoding/decoding flavor, for example, the creation module 602 is configured to implement step 302 in the embodiment shown in FIG. 3;
a second receiving module 603, configured to receive a first encoding/decoding request sent by the first service instance, where the first encoding/decoding request indicates to obtain a second video of a first encoding/decoding flavor based on a first video, for example, the second receiving module 603 is configured to implement step 303 in the embodiment shown in FIG. 3; and
a processing module 604, configured to: select, based on the first encoding/decoding request, a second codec instance supporting the first encoding/decoding flavor from the plurality of first codec instances, and indicate the second codec instance to encode/decode the first video, to obtain the second video. For example, the processing module 604 is configured to implement step 304 in the embodiment shown in FIG. 3.

In a possible implementation, the encoding/decoding flavor includes at least one of the following: video resolution, video coding standard, and video image quality.

In a possible implementation, the infrastructure further includes a plurality of third codec instances shared by service instances of a plurality of tenants; and the creation module 602 is configured to select, from the plurality of third codec instances based on the dedicated resource creation request, several available third codec instances as the plurality of first codec instances dedicated to the first service instance.

In a possible implementation, each first codec instance includes a plurality of first codecs, and each first codec supports one encoding/decoding flavor; and the processing module 604 is configured to: select, based on the first encoding/decoding request, an available second codec instance from the plurality of first codec instances, select a second codec supporting the first encoding/decoding flavor from a plurality of first codecs included in the second codec instance, and indicate the second codec to encode/decode the first video, to obtain the second video.

In a possible implementation, the processing module 604 is configured to send first information of the second codec to the first service instance, where the first information is used by the first service instance to send the first encoding/decoding request to the second codec, for the second codec to encode/decode the first video based on the first encoding/decoding request, to obtain the second video, and the first information includes at least one of the following: a network address of the second codec, an access port of the second codec, an identity credential of the second codec, and an encoding/decoding flavor supported by the second codec.

In a possible implementation, the cloud management platform further includes: an obtaining module, configured to obtain, based on the dedicated resource creation request, utilization of resources occupied by the plurality of first codec instances; and an elastic scaling module, configured to: if the utilization is greater than or equal to a utilization threshold indicated by the dedicated resource creation request, select at least one third codec instance from remaining third codec instances as a new first codec instance, and add the new first codec instance to the plurality of first codec instances.

In a possible implementation, the infrastructure further includes a second service instance of a second tenant, the plurality of tenants include the second tenant, each third codec instance includes a plurality of third codecs, and each third codec supports one encoding/decoding flavor; the second receiving module 603 is further configured to receive a second encoding/decoding request sent by the second service instance, where the second encoding/decoding request indicates to obtain a fourth video of a second encoding/decoding flavor based on a third video; and the processing module 604 is further configured to: select, based on the second encoding/decoding request, an available fourth codec instance from the remaining third codec instances, select a fourth codec supporting the second encoding/decoding flavor from a plurality of third codecs included in the fourth codec instance, and indicate the fourth codec to encode/decode the third video, to obtain the fourth video.

In a possible implementation, the processing module 604 is configured to send second information of the fourth codec to the second service instance, where the second information is used by the second service instance to send the second encoding/decoding request to the fourth codec, for the fourth codec to encode/decode the third video based on the second encoding/decoding request, to obtain the fourth video, and the second information includes at least one of the following: a network address of the fourth codec, an access port of the fourth codec, an identity credential of the fourth codec, and an encoding/decoding flavor supported by the fourth codec.

In a possible implementation, the first service instance or the first codec instance includes any one of the following: a physical server, a virtual machine, a container, a micro virtual machine, and a bare metal server.

It should be noted that, content like information exchange between the modules/units of the foregoing apparatus and an implementation process is based on the same concept as the method embodiment of this application, and produces the same technical effect as the method embodiment of this application. For specific content, refer to the foregoing descriptions of the method embodiment of embodiments of this application. Details are not described herein again.

FIG. 7 is a diagram of a structure of a compute device according to an embodiment of this application. As shown in FIG. 7, the compute device 700 (which may be configured to present the foregoing cloud management platform) includes a processor 701, a memory 702, a communication interface 703, and a bus 704. The processor 701, the memory 702, and the communication interface 703 are coupled to each other through a bus (not marked in the figure). The memory 702 stores instructions. When executable instructions in the memory 702 are executed, the compute device 700 performs the method performed by the cloud management platform in the foregoing method embodiment.

The compute device 700 may be one or more integrated circuits configured to implement the foregoing methods, for example, one or more application-specific integrated circuits (application-specific integrated circuits, ASICs), one or more microprocessors (digital signal processors, DSPs), one or more field programmable gate arrays (field programmable gate arrays, FPGAs), or a combination of at least two of these integrated circuit forms. For another example, when the unit in the apparatus is implemented in a form of scheduling a program by a processing element, the processing element may be a general-purpose processor, for example, a central processing unit (central processing unit, CPU) or another processor that may invoke the program. For still another example, the units may be integrated and implemented in a form of a system-on-a-chip (system-on-a-chip, SOC).

The processor 701 may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor.

The memory 702 may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) that is used as an external cache. Through an example but not limitative description, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

The memory 702 stores executable program code, and the processor 701 executes the executable program code to separately implement functions of the foregoing modules such as the first receiving module, the creation module, the second receiving module, and the processing module, so as to implement the foregoing video processing method based on the cloud management platform. In other words, the memory 702 stores instructions for performing the foregoing video processing method based on the cloud management platform.

The communication interface 703 uses a transceiver module, for example, but not limited to, a network interface card or a transceiver, to implement communication between the compute device 700 and another device or a communication network.

In addition to a data bus, the bus 704 may further include a power bus, a control bus, a status signal bus, and the like. The bus may be a peripheral component interconnect express (peripheral component interconnect express, PCIe) bus, an extended industry standard architecture (extended industry standard architecture, EISA) bus, a unified bus (unified bus, Ubus, or UB), a compute express link (compute express link, CXL), a cache coherent interconnect for accelerators (cache coherent interconnect for accelerators, CCIX), or the like. Buses may be classified into an address bus, a data bus, a control bus, and the like.

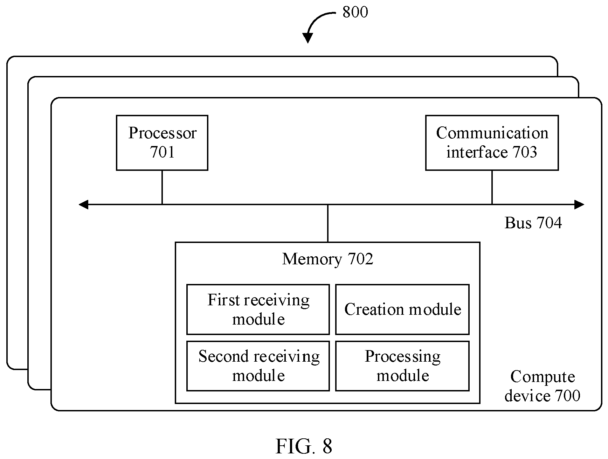

FIG. 8 is a diagram of a structure of a compute device cluster according to an embodiment of this application. As shown in FIG. 8, the compute device cluster 800 includes at least one compute device 700.

As shown in FIG. 8, the compute device cluster 800 includes the at least one compute device 700. A memory 702 in one or more compute devices 700 in the compute device cluster 800 may store same instructions for performing the foregoing video processing method based on the cloud management platform.

In some possible implementations, the memory 702 in the one or more compute devices 700 in the compute device cluster 800 may alternatively separately store a part of the instructions for performing the foregoing video processing method based on the cloud management platform. In other words, a combination of the one or more compute devices 700 may jointly perform the foregoing video processing method based on the cloud management platform.

It should be noted that memories 702 in different compute devices 700 in the compute device cluster 800 may store different instructions, to separately perform a part of functions of the foregoing cloud management platform. In other words, the instructions stored in the memories 702 in the different compute devices 700 may implement functions of one or more of modules such as the first receiving module, the creation module, the second receiving module, and the processing module.

In some possible implementations, the one or more compute devices 700 in the compute device cluster 800 may be connected to each other over a network. The network may be a wide area network, a local area network, or the like.

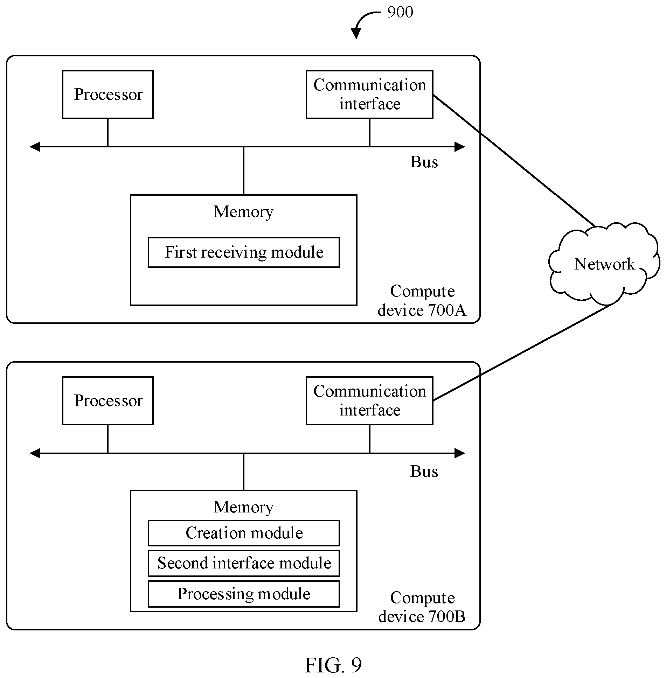

FIG. 9 is a diagram in which computer devices in a computer cluster are connected to each other over a network according to an embodiment of this application. As shown in FIG. 9, two compute devices 700A and 700B are connected to each other over the network. Specifically, each compute device is connected to the network through a communication interface in the compute device.

In a possible implementation, a memory in the compute device 700A stores instructions for performing functions of modules such as the first receiving module. In addition, a memory in the compute device 700B stores instructions for performing functions of modules such as the creation module, the second receiving module, and the processing module.

It should be understood that functions of the compute device 700A shown in FIG. 9 may alternatively be completed by a plurality of compute devices 700. Similarly, functions of the compute device 700B may alternatively be completed by a plurality of compute devices.

An embodiment of this application further relates to a computer storage medium. The computer-readable storage medium stores a program used for signal processing. When the program runs on a computer, the computer is caused to perform the steps performed by the cloud management platform in the embodiment shown in FIG. 3.

An embodiment of this application further relates to a computer program product. The computer program product stores instructions. When the instructions are executed by a computer, the computer is caused to perform the steps performed by the cloud management platform in the embodiment shown in FIG. 3.

It may be clearly understood by a person skilled in the art that, for the purpose of convenient and brief description, for a detailed working process of the foregoing system, apparatus, and unit, refer to a corresponding process in the foregoing method embodiment. Details are not described herein again.

In the several embodiments provided in this application, it should be understood that the disclosed system, apparatus, and method may be implemented in other manners. For example, the apparatus embodiments described above are merely examples. For example, division into the units is merely logical function division, and there may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, and may be located in one location, or may be distributed on a plurality of network units. A part or all of the units may be selected based on actual requirements to achieve the objectives of the solutions in embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When being implemented in the form of the software functional unit and sold or used as an independent product, the integrated unit may be stored in a computer-readable storage medium. Based on such an understanding, the technical solutions of this application essentially, or the part contributing to the conventional technologies, or all or a part of the technical solutions may be implemented in a form of a software product. The computer software product is stored in a storage medium and includes several instructions for instructing a computer device (which may be a personal computer, a server, or a network device) to perform all or a part of the steps of the methods described in embodiments of this application. The foregoing storage medium includes any medium that can store program code, for example, a USB flash drive, a removable hard disk, a read-only memory (ROM, read-only memory), a random access memory (RAM, random access memory), a magnetic disk, or an optical disc.

## Claims

1. A video processing method based on a cloud management platform, wherein the cloud management platform is configured to manage an infrastructure that provides a cloud service, and the infrastructure comprises a first service instance of a first tenant; and the method comprises:
receiving, by the cloud management platform through a creation interface, a dedicated resource creation request sent by the first tenant for the first service instance;
creating, by the cloud management platform based on the dedicated resource creation request, a plurality of first codec instances dedicated to the first service instance, wherein each first codec instance supports at least one encoding/decoding flavor;
receiving, by the cloud management platform, a first encoding/decoding request sent by the first service instance, wherein the first encoding/decoding request indicates to obtain a second video of a first encoding/decoding flavor based on a first video; and
selecting, by the cloud management platform based on the first encoding/decoding request, a second codec instance supporting the first encoding/decoding flavor from the plurality of first codec instances, and indicating the second codec instance to encode/decode the first video, to obtain the second video.

2. The method according to claim 1, wherein the encoding/decoding flavor comprises at least one of the following: video resolution, video coding standard, or video image quality.

3. The method according to claim 1 or 2, wherein the infrastructure further comprises a plurality of third codec instances shared by service instances of a plurality of tenants; and creating, by the cloud management platform based on the dedicated resource creation request, the plurality of first codec instances dedicated to the first service instance comprises:
selecting, by the cloud management platform from the plurality of third codec instances based on the dedicated resource creation request, several available third codec instances as the plurality of first codec instances dedicated to the first service instance.

4. The method according to any one of claims 1 to 3, wherein each first codec instance comprises a plurality of first codecs, and each first codec supports one encoding/decoding flavor; and
selecting, by the cloud management platform based on the first encoding/decoding request, the second codec instance supporting the first encoding/decoding flavor from the plurality of first codec instances, and indicating the second codec instance to encode/decode the first video, to obtain the second video comprises:
selecting, by the cloud management platform based on the first encoding/decoding request, an available second codec instance from the plurality of first codec instances, selecting a second codec supporting the first encoding/decoding flavor from a plurality of first codecs comprised in the second codec instance, and indicating the second codec to encode/decode the first video, to obtain the second video.

5. The method according to claim 4, wherein indicating, by the cloud management platform, the second codec to encode/decode the first video, to obtain the second video comprises:
sending, by the cloud management platform, first information of the second codec to the first service instance, wherein the first information is used by the first service instance to send the first encoding/decoding request to the second codec, for the second codec to encode/decode the first video based on the first encoding/decoding request, to obtain the second video, and the first information comprises at least one of the following: a network address of the second codec, an access port of the second codec, an identity credential of the second codec, and an encoding/decoding flavor supported by the second codec.

6. The method according to any one of claims 1 to 5, wherein the method further comprises:
obtaining, by the cloud management platform based on the dedicated resource creation request, utilization of resources occupied by the plurality of first codec instances; and
if the utilization is greater than or equal to a utilization threshold indicated by the dedicated resource creation request, selecting, by the cloud management platform, at least one third codec instance from remaining third codec instances as a new first codec instance, and adding the new first codec instance to the plurality of first codec instances.

7. The method according to claim 3, wherein the infrastructure further comprises a second service instance of a second tenant, the plurality of tenants comprise the second tenant, each third codec instance comprises a plurality of third codecs, and each third codec supports one encoding/decoding flavor; and the method further comprises:
receiving, by the cloud management platform, a second encoding/decoding request sent by the second service instance, wherein the second encoding/decoding request indicates to obtain a fourth video of a second encoding/decoding flavor based on a third video; and
selecting, by the cloud management platform based on the second encoding/decoding request, an available fourth codec instance from the remaining third codec instances, selecting a fourth codec supporting the second encoding/decoding flavor from a plurality of third codecs comprised in the fourth codec instance, and indicating the fourth codec to encode/decode the third video, to obtain the fourth video.

8. The method according to claim 7, wherein indicating, by the cloud management platform, the fourth codec to encode/decode the third video, to obtain the fourth video comprises:
sending, by the cloud management platform, second information of the fourth codec to the second service instance, wherein the second information is used by the second service instance to send the second encoding/decoding request to the fourth codec, for the fourth codec to encode/decode the third video based on the second encoding/decoding request, to obtain the fourth video, and the second information comprises at least one of the following: a network address of the fourth codec, an access port of the fourth codec, an identity credential of the fourth codec, and an encoding/decoding flavor supported by the fourth codec.

9. The method according to any one of claims 1 to 8, wherein the first service instance or the first codec instance comprises any one of the following: a physical server, a virtual machine, a container, a micro virtual machine, and a bare metal server.

10. A cloud management platform, wherein the cloud management platform is configured to manage an infrastructure that provides a cloud service, and the infrastructure comprises a first service instance of a first tenant; and the cloud management platform comprises:
a first receiving module, configured to receive, through a creation interface, a dedicated resource creation request sent by the first tenant for the first service instance;
a creation module, configured to create, based on the dedicated resource creation request, a plurality of first codec instances dedicated to the first service instance, wherein each first codec instance supports at least one encoding/decoding flavor;
a second receiving module, configured to receive a first encoding/decoding request sent by the first service instance, wherein the first encoding/decoding request indicates to obtain a second video of a first encoding/decoding flavor based on a first video; and
a processing module, configured to: select, based on the first encoding/decoding request, a second codec instance supporting the first encoding/decoding flavor from the plurality of first codec instances, and indicate the second codec instance to encode/decode the first video, to obtain the second video.

11. The cloud management platform according to claim 10, wherein the encoding/decoding flavor comprises at least one of the following: video resolution, video coding standard, and video image quality.

12. The cloud management platform according to claim 10 or 11, wherein the infrastructure further comprises a plurality of third codec instances shared by service instances of a plurality of tenants; and the creation module is configured to select, from the plurality of third codec instances based on the dedicated resource creation request, several available third codec instances as the plurality of first codec instances dedicated to the first service instance.

13. The cloud management platform according to any one of claims 10 to 12, wherein each first codec instance comprises a plurality of first codecs, and each first codec supports one encoding/decoding flavor; and the processing module is configured to: select, based on the first encoding/decoding request, an available second codec instance from the plurality of first codec instances, select a second codec supporting the first encoding/decoding flavor from a plurality of first codecs comprised in the second codec instance, and indicate the second codec to encode/decode the first video, to obtain the second video.

14. The cloud management platform according to claim 13, wherein the processing module is configured to send first information of the second codec to the first service instance, wherein the first information is used by the first service instance to send the first encoding/decoding request to the second codec, for the second codec to encode/decode the first video based on the first encoding/decoding request, to obtain the second video, and the first information comprises at least one of the following: a network address of the second codec, an access port of the second codec, an identity credential of the second codec, and an encoding/decoding flavor supported by the second codec.

15. The cloud management platform according to any one of claims 10 to 14, wherein the cloud management platform further comprises:
an obtaining module, configured to obtain, based on the dedicated resource creation request, utilization of resources occupied by the plurality of first codec instances; and
an elastic scaling module, configured to: if the utilization is greater than or equal to a utilization threshold indicated by the dedicated resource creation request, select at least one third codec instance from remaining third codec instances as the new first codec instance, and add the new first codec instance to the plurality of first codec instances.

16. The cloud management platform according to claim 12, wherein the infrastructure further comprises a second service instance of the second tenant, the plurality of tenants comprise the second tenant, each third codec instance comprises a plurality of third codecs, and each third codec supports one encoding/decoding flavor;
the second receiving module is further configured to receive a second encoding/decoding request sent by the second service instance, wherein the second encoding/decoding request indicates to obtain a fourth video of a second encoding/decoding flavor based on a third video; and
the processing module is further configured to: select, based on the second encoding/decoding request, an available fourth codec instance from the remaining third codec instances, select a fourth codec supporting the second encoding/decoding flavor from a plurality of third codecs comprised in the fourth codec instance, and indicate the fourth codec to encode/decode the third video, to obtain the fourth video.

17. The cloud management platform according to claim 16, wherein the processing module is configured to send second information of the fourth codec to the second service instance, wherein the second information is used by the second service instance to send the second encoding/decoding request to the fourth codec, for the fourth codec to encode/decode the third video based on the second encoding/decoding request, to obtain the fourth video, and the second information comprises at least one of the following: a network address of the fourth codec, an access port of the fourth codec, an identity credential of the fourth codec, and an encoding/decoding flavor supported by the fourth codec.

18. The cloud management platform according to any one of claims 10 to 17, wherein the first service instance or the first codec instance comprises any one of the following: a physical server, a virtual machine, a container, a micro virtual machine, and a bare metal server.

19. A compute device cluster, wherein the compute device cluster comprises at least one compute device, and each compute device comprises a processor and a memory, wherein
the memory is configured to store instructions; and
the processor is configured to cause, according to the instructions, the compute device cluster to perform the method according to any one of claims 1 to 9.

20. A computer storage medium, wherein the computer storage medium stores one or more instructions, and when the instructions are executed by one or more computers, the one or more computers are caused to implement the method according to any one of claims 1 to 9.

21. A computer program product, wherein the computer program product stores instructions, and when the instructions are executed by a computer, the computer is caused to implement the method according to any one of claims 1 to 9.
